# EUROPEAN PATENT SPECIFICATION

(11) **EP 4 159 805 B1**
(45) Date of publication and mention of the grant of the patent: **13.08.2025**
(21) Application number: 21813648.9
(22) Date of filing: 30.03.2021
(51) Int. Cl.: C08K 5/5419, C08K 9/06, C08L 83/05, C08L 83/07, C08K 3/22, C08G 77/12, C08G 77/20

(54) **THERMALLY CONDUCTIVE ADDITION-CURING SILICONE COMPOSITION AND METHOD FOR PRODUCING SAME**
WÄRMELEITFÄHIGE ADDITIONSVERNETZENDE SILIKONZUSAMMENSETZUNG UND VERFAHREN ZUR HERSTELLUNG DAVON
COMPOSITION DE SILICONE À DURCISSEMENT PAR ADDITION THERMOCONDUCTRICE ET SON PROCÉDÉ DE PRODUCTION

(30) Priority: 26.05.2020 JP 2020091048
(43) Date of publication of application: 05.04.2023
(73) Proprietor: SHIN-ETSU CHEMICAL CO., LTD., Tokyo 1000005 (JP)
(72) Inventor: IWATA Mitsuhiro, Annaka-shi, Gunma 379-0224 (JP)
(74) Representative: Sonnenhauser, Thomas Martin
(86) International application number: PCT/JP2021/013450
(87) International publication number: WO 2021/240987

(56) References cited:
- WO-A1-2017/135158
- JP-A- 2005 344 106
- JP-A- 2011 122 084
- JP-A- 2011 122 084
- JP-A- H1 149 959
- JP-A- H11 310 705

## Description

### TECHNICAL FIELD

The present invention relates to an addition-durable silicone composition having excellent thermal conductivity and a method for producing the same.

### BACKGROUND ART

As higher integration and higher voltage of electronic component circuits have been achieved in recent years, ICs and circuits generate a larger amount of heat. For a purpose of the relaxing thermal stress, thermally conductive silicone compositions are used.

Use of a filler having good thermal conductivity is known to relax the thermal stress. Known such fillers include a silica powder, an aluminum oxide powder, a silicon carbide powder, a silicon nitride powder, an aluminum nitride powder, a magnesium oxide powder, a diamond powder, metal powders such as iron, stainless steel, and copper, and a carbon powder.

However, among the above fillers, the metal powder and the carbon powder, which have electrical conductivity, cannot be used for the thermally conductive silicone composition having a purpose of electrical insulation. Both the silicon carbide powder and the diamond powder are highly hard materials, and wiring or elements in a substrate filled with these powders may be wore or broken. Although the silicon nitride powder, the aluminum nitride powder, the magnesium oxide powder, etc. can be used from the viewpoint of the electrical insulation, these powders are hydrolytic, and lack stability in a long term.

From the above viewpoint, the silica powder and the aluminum oxide powder are practically usable fillers. The silica powder, however, has insufficient thermal conductivity, and when high thermal conductivity is attempted to impart, operability such as a viscosity of the silicone composition will be considerably deteriorated. When the aluminum oxide powder is used, it is known that the Al-OH group remained on the alumina surface reacts with a hydrogen atom bonded to a silicon atom to proceed a dehydrogenation reaction. The effect of the dehydrogenation reaction is not negligible with a low-hardness material in which a crosslinking density is set to be low. Proposed as measures for the above are use of aluminum oxide treated with a silylketene acetal or the like (Patent Document 1) and a silicone gel composition in which a pH of aluminum oxide is specified (Patent Document 2).

However, the surface-treated aluminum oxide with a silylketene acetal has concern about change in hardness over time, and it is difficult to use in an environment for mainly the stress relaxation. The aluminum oxide in which a pH is specified uses a treatment agent of an inorganic acid, and the remained inorganic acid causes the dehydrogenation reaction over time. Thus, it is difficult to inhibit the change in hardness over time.

Accordingly, proposed is a thermally conductive silicone gel composition having excellent flowability and storability in a long term, and yielding a cured product having excellent stress relaxation property and little change in hardness over time. However, there is no specific description on a thermal conductivity, and the specified amount of Na⁺ ion is exceedingly large after boiling extraction of the aluminum oxide. Thus, it is insufficient when the thermal conductivity is 2.0 W/m·K or more (Patent Document 3). JPH1149959A discloses a composition for heat-conductive silicone gel.

Therefore, required is a thermally conductive addition-curable silicone composition that can be integrated in electronic devices without damaging heating electronic components, such as power devices, transistors, thyristors, and central processing units (CPUs) when used particularly as heat radiators for electronic components and that yields a thermally conductive addition-curable silicone cured product having excellent stress relaxation and insulation ability.

### CITATION LIST

### PATENT LITERATURE

Patent Document 1: JP 2741436 B
Patent Document 2: JP 3676544 B
Patent Document 3: JP 5821160 B

### SUMMARY OF INVENTION

### TECHNICAL PROBLEM

It has been found that simultaneously mixing and heat-treating aluminum oxide, as a thermally conductive filler, whose Na⁺ ion content is determined as 50 ppm or less when a powder of the aluminum oxide is subjected to heat-extraction with pure water at 60°C for 24 hours and the water layer is measured by ion chromatography, a thermally conductive filler such as aluminum oxide, and an alkenyl-group-containing organopolysiloxane at a temperature of 70°C or higher, then, adding an organohydrogenpolysiloxane into this mixture and simultaneously heat-treating the mixture, and then adding an organohydrogenpolysiloxane and a curing catalyst can improve the storability and reduce the change in hardness over time. However, the result is not satisfactory when the amount of Na⁺ ion is large.

The present invention has been made in view of the above-described circumstances. An object of the present invention is to provide a thermally conductive addition-curable silicone composition that can be applied on electric and electronic components and in a module including a circuit substrate mounting these components thereon, and that can exhibit excellent stress relaxation property and thermal conductivity after cured. In addition, an object of the present invention is to provide a method for producing the same.

### SOLUTION TO PROBLEM

To solve the above problem, the present invention provides a thermally conductive addition-curable silicone composition, comprising:
a heat-treated mixture comprising the following (A) to (C):
   (A) 100 parts by mass of an organopolysiloxane represented by the following average composition formula (1) and having at least two alkenyl groups bonded to a silicon atom in one molecule,

      RₐR¹_{b}SiO_{(4-a-b)/2} (1)

      wherein R represents an alkenyl group, R¹ represents a non-substituted or substituted monovalent hydrocarbon group having no aliphatic unsaturated bond, "a" represents a number of 0.0001 to 0.2, "b" represents a number of 1.7 to 2.2, and "a+b" represents a number satisfying 1.9 to 2.4;
   (B) an organohydrogenpolysiloxane represented by the following average composition formula (2) and having at least three hydrogen atoms bonded to a silicon atom in one molecule at an amount of 0.1 to 2 silicon atom-bonded hydrogen atoms, SiH groups, in the component (B) relative to one alkenyl group in the component (A),

      R²_{c}H_{d}SiO_{(4-c-d)/2} (2)

      wherein R² represents a non-substituted or substituted monovalent hydrocarbon group having no aliphatic unsaturated bond, "c" represents 0.7 to 2.2, "d" represents 0.001 to 0.5, and "c+d" represents a positive number satisfying 0.8 to 2.5; and
   (C) 1,000 to 7,000 parts by mass of aluminum oxide whose Na⁺ ion content is determined as 100 ppm or less when a powder of the aluminum oxide is subjected to heat-extraction with pure water at 120°C for 48 hours and the water layer is measured by ion chromatography, wherein
      the component (C) is surface-treated with a part of the component (B); and, along with the heat-treated mixture,
   (D) an organohydrogenpolysiloxane represented by the following average composition formula (3) and having at least two hydrogen atoms bonded to a silicon atom in one molecule at an amount of 0.01 to 3 silicon atom-bonded hydrogen atoms, SiH groups, in the component (D) relative to one alkenyl group in the component (A),

      R³ₑH_{f}SiO_{(4-e-f)/2} (3)

      wherein R³ represents a non-substituted or substituted monovalent hydrocarbon group having no aliphatic unsaturated bond, "e" represents 0.7 to 2.2, "f" represents 0.001 to 0.5, and "e+f" represents a positive number satisfying 0.8 to 2.5;
   (E) 1 to 200 ppm, as a platinum mass basis, of a platinum-based metal catalyst relative to 100 parts by mass of the component (A); and
   (F) 0.01 to 10 parts by mass of an ion trap agent relative to 100 parts by mass of the component (A), the ion trap agent being cation-exchange type and/or both-ions-exchange type and having at least one element supported thereon selected from Zr, Bi, Sb, Mg, and Al, wherein
the composition has a thermal conductivity of 1.0 to 7.0 W/m·K with a hot disc method in accordance with ISO 22007-2, and the composition has a viscosity at 25°C of 30 to 800 Pa·s when measured with a spiral viscometer at a rotation number of 10 rpm.

Such a thermally conductive addition-curable silicone composition can improve the storability and reduce the change in hardness over time. A thermally conductive addition-curable silicone, which is a cured product of the above composition, can be preferably used for protecting electric and electronic components and a circuit substrate mounting these components thereon. Therefore, the thermally conductive addition-curable silicone can exhibit excellent stress relaxation property and thermal conductivity.

Preferably, a total amount of the SiH group in the component (B) and the component (D) is in a proportion of 0.11 to 5 relative to one alkenyl group in the component (A).

Such a configuration yields a stable silicone cured product without exceedingly hardness to be brittle.

In addition, preferably, the heat-treated mixture is a heat-treated mixture of:
the components (A) to (C); and
(G) a silane coupling agent and/or (H) an organopolysiloxane represented by the following general formula (4) and having a viscosity at 25°C of 0.01 to 30 Pa·s, 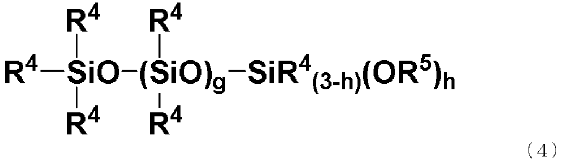
wherein R⁴ independently represents a non-substituted or substituted monovalent hydrocarbon group, R⁵ independently represents an alkyl group, an alkoxyalkyl group, an alkenyl group, or an acyl group, "g" represents an integer of 5 to 100, and "h" represents an integer of 1 to 3.

Such a thermally conductive addition-curable silicone composition can further improve the storability and reduce the change in hardness over time.

Also provided is a method for producing a thermally conductive addition-curable silicone composition, the method comprising:
heat-treating a mixture containing the following (A) to (C) at a temperature of 70°C or higher to surface-treat the component (C) with a part of the component (B) :
   (A) 100 parts by mass of an organopolysiloxane represented by the following average composition formula (1) and having at least two alkenyl groups bonded to a silicon atom in one molecule,

      RₐR¹_{b}SiO_{(4-a-b)/2} (1)

      wherein R represents an alkenyl group, R¹ represents a non-substituted or substituted monovalent hydrocarbon group having no aliphatic unsaturated bond, "a" represents a number of 0.0001 to 0.2, "b" represents a number of 1.7 to 2.2, and "a+b" represents a number satisfying 1.9 to 2.4;
   (B) an organohydrogenpolysiloxane represented by the following average composition formula (2) and having at least three hydrogen atoms bonded to a silicon atom in one molecule at an amount of 0.1 to 2 silicon atom-bonded hydrogen atom, SiH group, in the component (B) relative to one alkenyl group in the component (A),

      R²_{c}H_{d}SiO _{(4-c-d)}/2 (2)

      wherein R² represents a non-substituted or substituted monovalent hydrocarbon group having no aliphatic unsaturated bond, "c" represents 0.7 to 2.2, "d" represents 0.001 to 0.5, and "c+d" represents a positive number satisfying 0.8 to 2.5; and
   (C) 1,000 to 7,000 parts by mass of aluminum oxide whose Na⁺ ion content is determined as 100 ppm or less when a powder of the aluminum oxide is subjected to heat-extraction with pure water at 120°C for 48 hours and the water layer is measured by ion chromatography;
subsequently cooling the heat-treated mixture; and
adding and mixing the following (D) to (F) into the heat-treated mixture:
   (D) an organohydrogenpolysiloxane represented by the following average composition formula (3) and having at least two hydrogen atoms bonded to a silicon atom in one molecule at an amount of 0.01 to 3 silicon atom-bonded hydrogen atom, SiH group, in the component (D) relative to one alkenyl group in the component (A),

      R³ₑH_{f}SiO_{(4-e-f)/2} (3)

      wherein R³ represents a non-substituted or substituted monovalent hydrocarbon group having no aliphatic unsaturated bond, "e" represents 0.7 to 2.2, "f" represents 0.001 to 0.5, and "e+f" represents a positive number satisfying 0.8 to 2.5;
   (E) 1 to 200 ppm, as a platinum mass basis, of a platinum-based metal catalyst relative to 100 parts by mass of the component (A); and
   (F) 0.01 to 10 parts by mass of an ion trap agent relative to 100 parts by mass of the component (A), the ion trap agent being cation-exchange type and/or both-ions-exchange type and having at least one element supported thereon selected from Zr, Bi, Sb, Mg, and Al,
to obtain a composition having a thermal conductivity of 1.0 to 7.0 W/m·K with a hot disc method in accordance with ISO 22007-2, and having a viscosity at 25°C of 30 to 800 Pa·s when measured with a spiral viscometer at a rotation number of 10 rpm.

Such a method for producing an addition-curable silicone rubber composition yields a thermally conductive addition-curable silicone composition with improved storability and reduced change in hardness over time. A thermally conductive addition-curable silicone, which is a cured product of the above composition, can be preferably used for protecting electric and electronic components and a circuit substrate mounting these components thereon. Therefore, the thermally conductive addition-curable silicone can exhibit excellent stress relaxation property and thermal conductivity.

In addition, preferably provided is the method for producing a thermally conductive addition-curable silicone composition, wherein a total amount of the SiH group in the component (B) and the component (D) is in a proportion of 0.11 to 5 relative to one alkenyl group in the component (A).

Such a producing method yields a stable silicone cured product without exceedingly hardness to be brittle.

Preferably provided is the method for producing a thermally conductive addition-curable silicone composition, wherein (G) a silane coupling agent and/or (H) an organopolysiloxane represented by the following general formula (4) and having a viscosity at 25°C of 0.01 to 30 Pa·s is further added into the mixture to be heat-treated at a temperature of 70°C of higher, 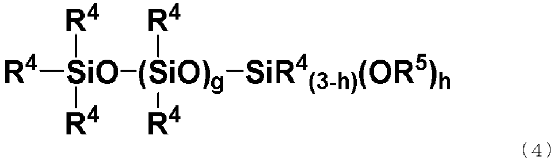 wherein R⁴ independently represents a non-substituted or substituted monovalent hydrocarbon group, R⁵ independently represents an alkyl group, an alkoxyalkyl group, an alkenyl group, or an acyl group, "g" represents an integer of 5 to 100, and "h" represents an integer of 1 to 3.

Such a method for producing an addition-curable silicone rubber composition can yield a thermally conductive addition-curable silicone composition with further improved storability and reduced change in hardness over time.

### ADVANTAGEOUS EFFECTS OF INVENTION

The present invention can yield a thermally conductive addition-curable silicone composition with improved storability and reduced change in hardness over time. A thermally conductive addition-curable silicone, which is a cured product of the above composition, can be preferably used for protecting electric and electronic components and a circuit substrate mounting these components thereon. Therefore, the thermally conductive addition-curable silicone can exhibit excellent stress relaxation property and thermal conductivity.

### DESCRIPTION OF EMBODIMENTS

The present inventors have earnestly studied to achieve the above object and consequently found that, when preparing a thermally conductive addition-curable silicone composition, simultaneously mixing and heat-treating aluminum oxide whose Na⁺ ion content is determined as 100 ppm or less when a powder of the aluminum oxide is subjected to heat-extraction with pure water at 120°C for 48 hours and the water layer is measured by ion chromatography as a thermally conductive filler, an alkenyl-group-containing organopolysiloxane, and an organohydrogenpolysiloxane at a temperature of 70°C or higher, and then adding an organohydrogenpolysiloxane, a curing catalyst, and an ion trap agent can improve the storability and reduce a change in hardness over time. This finding has led to the completion of the present invention.

Specifically, the present invention is a thermally conductive addition-curable silicone composition, comprising:
a heat-treated mixture comprising the following (A) to (C):
   (A) 100 parts by mass of an organopolysiloxane represented by the following average composition formula (1) and having at least two alkenyl groups bonded to a silicon atom in one molecule,

      RₐR¹_{b}SiO_{(4-a-b)/2} (1)

      wherein R represents an alkenyl group, R¹ represents a non-substituted or substituted monovalent hydrocarbon group having no aliphatic unsaturated bond, "a" represents a number of 0.0001 to 0.2, "b" represents a number of 1.7 to 2.2, and "a+b" represents a number satisfying 1.9 to 2.4;
   (B) an organohydrogenpolysiloxane represented by the following average composition formula (2) and having at least three hydrogen atoms bonded to a silicon atom in one molecule at an amount of 0.1 to 2 silicon atom-bonded hydrogen atoms, SiH groups, in the component (B) relative to one alkenyl group in the component (A),

      R²_{c}H_{d}SiO _{(4-c-d)}/2 (2)

      wherein R² represents a non-substituted or substituted monovalent hydrocarbon group having no aliphatic unsaturated bond, "c" represents 0.7 to 2.2, "d" represents 0.001 to 0.5, and "c+d" represents a positive number satisfying 0.8 to 2.5; and
   (C) 1,000 to 7,000 parts by mass of aluminum oxide whose Na⁺ ion content is determined as 100 ppm or less when a powder of the aluminum oxide is subjected to heat-extraction with pure water at 120°C for 48 hours and the water layer is measured by ion chromatography, wherein
      the component (C) is surface-treated with a part of the component (B); and, along with the heat-treated mixture,
   (D) an organohydrogenpolysiloxane represented by the following average composition formula (3) and having at least two hydrogen atoms bonded to a silicon atom in one molecule at an amount of 0.01 to 3 silicon atom-bonded hydrogen atoms, SiH groups, in the component (D) relative to one alkenyl group in the component (A),

      R³ₑH_{f}SiO_{(4-e-f)/2} (3)

      wherein R³ represents a non-substituted or substituted monovalent hydrocarbon group having no aliphatic unsaturated bond, "e" represents 0.7 to 2.2, "f" represents 0.001 to 0.5, and "e+f" represents a positive number satisfying 0.8 to 2.5;
   (E) 1 to 200 ppm, as a platinum mass basis, of a platinum-based metal catalyst relative to 100 parts by mass of the component (A); and
   (F) 0.01 to 10 parts by mass of an ion trap agent relative to 100 parts by mass of the component (A), the ion trap agent being cation-exchange type and/or both-ions-exchange type and having at least one element supported thereon selected from Zr, Bi, Sb, Mg, and Al, wherein
the composition has a thermal conductivity of 1.0 to 7.0 W/m·K with a hot disc method in accordance with ISO 22007-2, and the composition has a viscosity at 25°C of 30 to 800 Pa·s when measured with a spiral viscometer at a rotation number of 10 rpm.

Hereinafter, the present invention will be described in detail, but the present invention is not limited thereto.

### [Component (A)]

The component (A) in the inventive composition is a main component (base polymer) in the composition. The component (A) is represented by the following average composition formula (1), and is an organopolysiloxane having at least two alkenyl groups bonded to a silicon atom (hereinafter, referred to as "silicon atom-bonded alkenyl group") in one molecule. The component (A) has preferably 2 to 50, particularly preferably 2 to 20, silicon atom-bonded alkenyl groups. These silicon atom-bonded alkenyl groups may be bonded to a silicon atom at a terminal of the molecular chain, may be bonded to a silicon atom at non-terminal of the molecular chain (that is, other than a terminal of the molecular chain), or may be a combination thereof.

RₐR¹_{b}S₁O_{(4-a-b)/2} (1)

wherein R represents an alkenyl group, R¹ represents a non-substituted or substituted monovalent hydrocarbon group having no aliphatic unsaturated bond, "a" represents a number of 0.0001 to 0.2, "b" represents a number of 1.7 to 2.2, and "a+b" represents a number satisfying 1.9 to 2.4;

In the formula (1), R typically represents an alkenyl group having 2 to 6, preferably 2 to 4, carbon atoms. Specific example thereof include lower alkenyl groups, such as a vinyl group, an allyl group, a propenyl group, an isopropenyl group, a butenyl group, and an isobutenyl group. A vinyl group is particularly preferable.

R¹ typically represents a non-substituted or substituted monovalent hydrocarbon group having 1 to 10, preferably 1 to 6, carbon atoms and having no aliphatic unsaturated bond. Specific example thereof include: alkyl groups, such as a methyl group, an ethyl group, a propyl group, an isopropyl group, a butyl group, an isobutyl group, a tert-butyl group, a pentyl group, a hexyl group, a cyclohexyl group, an octyl group, a decyl group, and a dodecyl group; aryl groups, such as a phenyl group and a tolyl group; aralkyl groups, such as a benzyl group and a phenylethyl group; and groups obtained from these groups by substituting a part or all of hydrogen atoms therein with a halogen atom, such as fluorine and chlorine. Examples of such substituted groups include a chloromethyl group and a 3,3,3-trifluoropropyl group. From the viewpoint of easiness of synthesis, etc., a methyl group, a phenyl group, and a 3,3,3-trifluoropropyl group are preferable.

In the formula (1), "a" represents a number of 0.0001 to 0.2, and preferably a number of 0.0005 to 0.1. "b" represents a number of 1.7 to 2.2, and preferably a number of 1.9 to 2.0. "a+b" represents a number satisfying 1.9 to 2.4, and preferably a number satisfying 1.95 to 2.05.

A molecular structure of the organopolysiloxane of the component (A) is not particularly limited, and may be any of: a linear chain structure; a branched structure having an RSiO_{3/2} unit, an R¹SiO_{3/2} unit, a SiO₂ unit (in the formulae, groups represented by R and R¹ are defined as above), etc. as a part of the molecular chain; a cyclic structure; a three-dimensional mesh-like (resin-like) structure; and a combination thereof. The molecular structure is particularly preferably a linear-chain diorganopolysiloxane blocked at both terminals of the molecular chain with triorganosiloxy groups in which the main chain is basically composed of repeating diorganosiloxane units.

A viscosity of the organopolysiloxane of the component (A) is preferably 50 to 100,000 mPa·s, and more preferably 100 to 10,000 mPa·s. When this viscosity is 50 to 100,000 mPa·s, the obtained cured product has excellent strength, flowability, and operability. Note that the viscosity is a value at 25°C measured with a rotational viscosimeter (the same applies hereinafter).

Examples of the organopolysiloxane of the component (A) satisfying the above requirements include organopolysiloxanes represented by the following general formula (1A), 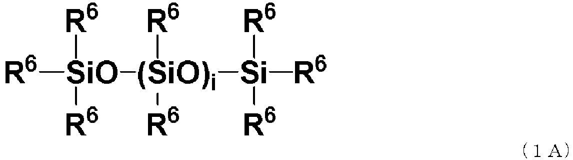 wherein R⁶ independently represents a non-substituted or substituted monovalent hydrocarbon group, at least two of R⁶ represent alkenyl groups, and "i" represents an integer of 20 to 2,000.

In this formula (1A), the non-substituted or substituted monovalent hydrocarbon group represented by R⁶ is same as a group defined as above R (the alkenyl group) and R¹ (the non-substituted or substituted monovalent hydrocarbon group having no aliphatic unsaturated bond), and the number of carbon atoms and the specific example thereof are also same. "i" represents preferably an integer of 40 to 1,200, and more preferably an integer of 50 to 600.

Specific examples of the organopolysiloxane represented by the formula (1A) include dimethylpolysiloxane blocked at both terminals of the molecular chain with dimethylvinylsiloxy groups, dimethylpolysiloxane blocked at one terminal of the molecular chain with a trimethylsiloxy group and blocked at the other terminal with a dimethylvinylsiloxy group, dimethylsiloxane-methylvinylsiloxane copolymer blocked at both terminal of the molecular chain with trimethylsiloxy groups, dimethylsiloxane-methylvinylsiloxane copolymer blocked at one terminal of the molecular chain with a trimethylsiloxy group and blocked at the other terminal with a dimethylvinylsiloxy group, dimethylsiloxane-methylvinylsiloxane copolymer blocked at both terminals of the molecular chain with dimethylvinylsiloxy groups, and dimethylsiloxane-diphenylsiloxane copolymer blocked at both terminals of the molecular chain with dimethylvinylsiloxy groups.

The organopolysiloxane of the component (A) may be used alone, or may be used in combination of two or more thereof.

The above organopolysiloxane having an alkenyl group itself is a known compound, and produced by a conventionally known method.

### [Component (B)]

The component (B) of the inventive composition is a component having at least three hydrogen atoms bonded to a silicon atom in one molecule. The component (B) serves as a surface treatment agent of the thermally conductive filler, such as aluminum oxide, and as a crosslinker. In other words, when heat-treated at high temperature, a part of the component (B) is consumed by dehydrogenation reaction with an Al-OH group remained on a surface of the component (C), described later, or with a residue of the surface treatment agent, which is an inorganic acid. The remained hydrogen atoms bonded to a silicon atom causes addition-reaction with the alkenyl group of the component (A). The component (B) is an essential component of the present invention.

The component (B) is represented by the following average composition formula (2), and is an organohydrogenpolysiloxane having at least three hydrogen atoms bonded to a silicon atom (hereinafter, referred to as "silicon atom-bonded hydrogen atoms") in one molecule. This organohydrogenpolysiloxane preferably has 3 to 100, more preferably 3 to 50, particularly preferably 3 to 20, silicon atom-bonded hydrogen atoms in one molecule.

R²_{c}H_{d}SiO_{(4-c-d)/2} (2)

In the formula, R² represents a non-substituted or substituted monovalent hydrocarbon group having no aliphatic unsaturated bond, "c" represents 0.7 to 2.2, "d" represents 0.001 to 0.5, and "c+d" represents a positive number satisfying 0.8 to 2.5.

In the formula (2), R² independently represents a non-substituted or substituted monovalent hydrocarbon group having no aliphatic unsaturated bond, and the number of carbon atoms therein is typically 1 to 10, and preferably 1 to 6. Specific examples thereof include: alkyl groups, such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups, such as a phenyl group, a tolyl group, a xylyl group, and a naphthyl group; aralkyl groups, such as a benzyl group, a phenylethyl group, and a phenylpropyl group; and groups obtained from these groups by substituting a part or all of hydrogen atoms therein with a halogen atom, such as chlorine, bromine, and fluorine, such as a 3,3,3-trifluoropropyl group. Among these, an alkyl group, an aryl group, and a 3,3,3-trifluoropropyl group are preferable, and a methyl group, a phenyl group, and a 3,3,3-trifluoropropyl group are more preferable.

"c" represents a positive number of 0.7 to 2.2, and preferably a positive number of 1.0 to 2.1. "d" represents a positive number of 0.001 to 0.5, and preferably a positive number of 0.005 to 0.1. "c+d" is within a range of 0.8 to 2.5, preferably satisfies a range of 1.0 to 2.5, and more preferably satisfies a range of 1.5 to 2.2.

The number of silicon atoms in one molecule of the organohydrogenpolysiloxane of the component (B) (that is, polymerization degree) is typically 10 to 1,000. The number of silicon atoms is preferably 20 to 500, and more preferably 20 to 100 in terms of good handing operability of the composition and good properties of the obtained cured product.

A molecular structure of the organohydrogenpolysiloxane of the component (B) is not particularly limited as long as it satisfies the above requirements. A viscosity of the organohydrogenpolysiloxane of the component (B) is typically 1 to 10,000 mPa·s, preferably 3 to 2,000 mPa·s, and more preferably 10 to 1,000 mPa·s. The component (B) is preferably liquid at a room temperature (25°C).

Examples of the organohydrogenpolysiloxane represented by the formula (2) include methylhydrogensiloxane-dimethylsiloxane cyclic copolymer, methylhydrogenpolysiloxane blocked at both terminals with dimethylhydrogensiloxy groups, methylhydrogen-dimethylsiloxane copolymer blocked at both terminals with dimethylhydrogensiloxy groups, methylhydrogen-diphenylsiloxane copolymer blocked at both terminals with dimetylhydrogensiloxy groups, methylhydrogen-dimethylsiloxane-diphenylsiloxane copolymer blocked at both terminals with dimethylhydrogensiloxy groups, methylhydrogenpolysiloxane blocked at both terminals with trimethylsiloxy groups, dimethylsiloxane-methylhydrogensiloxane copolymer blocked at both terminals with trimethylsiloxy groups, methylhydrogensiloxane-diphenylsiloxane copolymer blocked at both terminals with trimethylsiloxy groups, methylhydrogensiloxane-diphenylsiloxane-dimethylsiloxane copolymer blocked at both terminals with trimethylsiloxy groups, a copolymer composed of a (CH₃)₂HSiO_{1/2} unit, a (CH₃)₂HSiO unit, and a CH₃SiO_{3/2} unit, a copolymer composed of a (CH₃)₂HSiO_{1/2} unit, a (C₆H₅)₂SiO unit, a (CH₃)₂SiO unit, and a CH₃SiO_{3/2} unit, a copolymer composed of a (CH₃)(C₆H₅)HSiO_{1/2} unit, a (CH₃)₂SiO unit, and a CH₃SiO_{3/2} unit, a copolymer composed of a (CH₃)₂HSiO_{1/2} unit, a (CH₃)₂SiO unit, and a C₆H₅SiO_{3/2} unit, a copolymer composed of a (CH₃)(CF₃C₂H₄)HSiO_{1/2} unit, a (CH₃)(CF₃C₂H₄)SiO unit, and a CH₃SiO_{3/2} unit, a copolymer composed of a (CH₃)(CF₃C₂H₄)HSiO_{1/2} unit, a (CH₃)(CF₃C₂H₄)SiO unit, a (CH₃)₂SiO unit, and a CH₃SiO_{3/2} unit, a copolymer composed of a (CH₃)₂HSiO_{1/2} unit, a (CH₃)(CF₃C₂H₄)SiO unit, and a CH₃SiO_{3/2} unit, a copolymer composed of a (CH₃)₂HSiO_{1/2} unit, a (CH₃)(CF₃C₂H₄)SiO unit, a (CH₃)₂SiO unit, and a CH₃SiO_{3/2} unit, and a copolymer composed of a (CH₃)₂HSiO_{1/2} unit, a (CH₃)(CF₃C₂H₄)SiO unit, a (CH₃)₂SiO unit, and a (CF₃C₂H₄)SiO_{3/2} unit.

The organohydrogenpolysiloxane of the component (B) may be used alone, or may be used in combination of two or more thereof. This organohydrogenpolysiloxane is synthesized by a conventionally known method.

A blend amount of the organohydrogenpolysiloxane of the component (B) is an amount of 0.1 to 2, more preferably an amount of 0.2 to 2, further preferably an amount of 0.5 to 2, of silicon atom-bonded hydrogen atoms (SiH groups) in the component (B) relative to one alkenyl group of the component (A). If the blend amount is too small, the effect of improvement in the storage stability may be insufficient. If the blend amount is too large, the obtained thermally conductive addition-curable silicone may have unstable physical properties.

### [Component (C)]

The component (C) of the inventive composition is aluminum oxide whose Na⁺ ion content is determined as 0 ppm or more and 100 ppm or less when a powder of the aluminum oxide is subjected to heat-extraction with pure water at 120°C for 48 hours and the water layer is measured by ion chromatography, and the Na⁺ ion content is preferably 80 ppm or less and more preferably 60 ppm or less. If the Na⁺ ion content is more than 100 ppm, the component (E) may be deactivated over time.

For regulating the amount of Na⁺ ion in the aluminum oxide used in the present invention within the above range, the amount of Na⁺ ion can be regulated by dispersing a commercially available powder of aluminum oxide in water, and stirring to wash the dispersion with water at a normal temperature (1 to 25°C) or with heating, to shorten the process time, at 60°C, for example.

The powder of aluminum oxide preferably has an average particle diameter of 1 to 100 µm, more preferably 5 to 50 µm, with a laser diffraction measurement. The powder of aluminum oxide is preferably crushed particles and spherical particles. The powder of aluminum oxide may be used alone, or may be used in combination of two or more, a plurality of, powders having different average particle diameters. When the average particle diameter is 1 µm or more, the particles are sufficiently contacted with each other, and thermal resistance with interparticle contact does not increase, resulting in sufficient thermal conductivity. When the average particle diameter is 100 µm or less, roughness on the sheet surface does not become large, and interface thermal resistance does not increase, resulting in good thermal conductivity.

A blend amount of the powder of aluminum oxide that is the thermally conductive filler of the component (C) is 1,000 to 7,000 parts by mass, preferably 1,000 to 6,900 parts by mass, and further preferably 1,000 to 6,700 parts by mass relative to 100 parts by mass of the component (A). A blend amount is out of the above range fails to yield the inventive thermally conductive addition-curable silicone composition yielding the thermally conductive addition-curable silicone that has good viscosity, thermal conductivity, and storability, and that can reduce a change in hardness over time.

### [Heat-Treated Mixture]

In the present invention, these components (A) to (C) are mixed with heating at 70°C or higher, preferably 100 to 200°C, more preferably 100 to 170°C, further preferably 100 to 160°C, particularly preferably 100 to 150°C for preferably 60 minutes or longer to form a heat-treated mixture of the components (A) to (C). An upper limit of the heat treatment time is not particularly limited, and the heat treatment is performed for preferably 60 to 240 minutes, more preferably 60 to 180 minutes, and particularly preferably 60 to 120 minutes. If the heat treatment temperature is lower than 70°C, the reaction between: the hydrogen atom bonded to a silicon atom of the component (B); and a reactive group or reactive substance that can decrease the storage stability, such as an Al-OH group in the component (C) and a remained inorganic acid, becomes slow. When the heat treatment temperature is 200°C or lower, there is no risk of deterioration of the polymer itself of the component (A) and the component (B). The sufficient heat treatment time sufficiently proceeds the reaction between: the hydrogen atom bonded to a silicon atom of the component (B); and a reactive group or reactive substance that can decrease the storage stability, such as a reactive group including an Al-OH group in the component (C) and a remained inorganic acid, resulting in sufficient effect of improvement in the storage stability.

### [Component (D)]

The component (D) of the inventive composition is an organohydrogenpolysiloxane represented by the following average composition formula (3) and having at least two hydrogen atoms bonded to a silicon atom in a molecule,

R³ₑH_{f}SiO_{(4-e-f)/2} (3)

wherein R³ represents a non-substituted or substituted monovalent hydrocarbon group having no aliphatic unsaturated bond, "e" represents 0.7 to 2.2, "f" represents 0.001 to 0.5, and "e+f" represents a positive number satisfying 0.8 to 2.5.

An upper limit of the number of the hydrogen atoms bonded to a silicon atom is not particularly limited, and preferably 100 or less.

In the formula (3), R³ independently represents a non-substituted or substituted monovalent hydrocarbon group having no aliphatic unsaturated bond, and the number of carbon atoms therein is typically 1 to 10, and preferably 1 to 6. Specific examples thereof include: alkyl groups, such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups, such as a phenyl group, a tolyl group, a xylyl group, and a naphthyl group; aralkyl groups, such as a benzyl group, a phenylethyl group, and a phenylpropyl group; and groups obtained from these groups by substituting a part or all of hydrogen atoms therein with a halogen atom, such as chlorine, bromine, and fluorine, such as a 3,3,3-trifluoropropyl group. Among these, an alkyl group, an aryl group, and a 3,3,3-trifluoropropyl group are preferable, and a methyl group, a phenyl group, and a 3,3,3-trifluoropropyl group are more preferable.

"e" represents a positive number of 0.7 to 2.2, and preferably a positive number of 1.0 to 2.1. "f" represents a positive number of 0.001 to 0.5, and preferably a positive number of 0.005 to 0.1. "e+f" is within a range of 0.8 to 2.5, preferably satisfies a range of 1.0 to 2.5, and more preferably satisfies a range of 1.5 to 2.2.

The number of silicon atoms in one molecule of the organohydrogenpolysiloxane of the component (D) (that is, polymerization degree) is typically 10 to 1,000. The number of silicon atoms is preferably 15 to 500, and more preferably 18 to 100 in terms of good handing operability of the composition and properties of the obtained cured product.

A molecular structure of the organohydrogenpolysiloxane of the component (D) is not particularly limited as long as it satisfies the above requirements.

A viscosity of the organohydrogenpolysiloxane of the component (D) is typically 1 to 10,000 mPa·s, preferably 3 to 2,000 mPa·s, and more preferably 10 to 1,000 mPa·s. The composition (D) is preferably liquid at a room temperature (25°C).

Examples of the organohydrogenpolysiloxane represented by the formula (3) include methylhydrogensiloxane-dimethylsiloxane cyclic copolymer, polysiloxane blocked at both terminals with dimethylhydrogensiloxy groups, methylhydrogenpolysiloxane blocked at both terminals with trimethylsiloxy groups, dimethylsiloxane-methylhydrogensiloxane copolymer blocked at both terminals with trimethylsiloxy groups, methylhydrogensiloxane-diphenylsiloxane copolymer blocked at both terminals with trimethylsiloxy groups, and methylhydrogensiloxane-diphenylsiloxane-dimethylsiloxane copolymer blocked at both terminals with trimethylsiloxy groups.

It is essential to use the component (D) so that the number of the SiH groups in the component (D) is in a proportion of 0.01 to 3 relative to one alkenyl group in the component (A). If the number of the SiH groups in the component (D) is less than 0.01 relative to one alkenyl group in the component (A), the cured product may become too soft to obtain a stable silicone cured product. If the number of the SiH groups in the component (D) is more than 3 relative to one alkenyl group in the component (A), the silicone cured product may become too hard and brittle.

The organohydrogenpolysiloxane of the component (D) may be used alone, or may be used in combination of two or more thereof. This organohydrogenpolysiloxane is synthesized by a conventionally known method.

In the present invention, it is preferable to use the component (B) and the component (D) so that a total amount of the SiH groups in the component (B) and the component (D) is in a proportion of 0.11 to 5, particularly 0.25 to 4, relative to one alkenyl group in the component (A). When the total amount of the SiH groups in the component (B) and the component (D) is 0.11 or more relative to one alkenyl group in the component (A), the cured product does not becomes too soft to obtain a stable silicone cured product. When the total amount of the SiH groups in the component (B) and the component (D) is 5 or less relative to one alkenyl group in the component (A), the silicone cured product does not become too hard and brittle.

### [Component (E)]

The platinum-based metal catalyst of the component (E) in the inventive composition is a catalyst that promotes an addition reaction between: the alkenyl group in the component (A); and the hydrogen atom bonded to a silicon atom in the component (B) and the component (D). For example, chloroplatinic acid, an alcohol-modified chloroplatinic acid, a coordination product between chloroplatinic acid and olefins, aldehydes, vinylsiloxanes, or an acetylene compound, tetrakis(triphenylphosphine)palladium, chlorotris(triphenylphosphine)rhodium, etc. are used. The catalyst is preferably a platinum-base catalyst, and most preferably used is a coordination product of chloroplatinic acid and vinylsiloxane.

A blend amount of the component (E) may be a catalytic amount, and is typically 1 to 200 ppm, preferably 2 to 100 ppm, as a platinum-group metal mass basis, relative to 100 parts by mass of the component (A). It is essential to regulate the blend amount of the component (E) within this range for obtaining appropriate curability.

### [Component (F)]

The component (F) is a cation-exchange type and/or both-ions-exchange type ion trap agent, which can inhibit deterioration over time of the component (E) due to Na⁺ ion contained in the component (C) in the inventive composition. Thus, an anion-exchange type trap agent is not suitable for the present invention.

In the component (F), at least one element selected from Zr, Bi, Sb, Mg, and Al is supported. The element is preferably selected from Zr, Bi, Mg, and Al, and more preferably selected from Zr, Mg, and Al.

Other constitutions of the component (F) are not particularly limited, but the support is preferably one or two or more selected from, for example, hydrotalcites and inorganic-ion exchangers such as an acidic salt of a polyvalent metal. Among these, the ion trap agent is particularly preferably supported on hydrotalcites from the viewpoint of improvement in the storage property of the inventive composition.

A support amount of the element in the component (F) is preferably 0.1 to 10 meq/g, and particularly preferably 1 to 8 meq/g as a total exchange amount of each ion. Within this range, the storage property of the inventive composition can be more effectively improved. The total exchange amount of ions means an ion-exchange amount in 0.1 N hydrochloric acid or 0.1 N aqueous solution of sodium hydroxide.

For the component (F), commercially available products such as IXE-100, IXE-600, IXEPLAS-A1, and IXEPLAS-A2 (manufactured by Toagosei. Co., Ltd.) can be used, for example.

An addition amount of the component (F) is 0.01 to 10 parts by mass, preferably 0.1 to 10 parts by mass, and further preferably 0.5 to 10 parts by mass relative to 100 parts by mass of the component (A). If the amount of the component (F) is less than 0.01 part by mass, the deterioration over time of the component (E) may not be inhibited. If the amount of the component (F) is more than 10 parts by mass, appropriate curability may not be obtained.

### [Component (G)]

For the inventive composition, (G) the silane coupling agent can be used as necessary. Examples of (G) the silane coupling agent include vinyl-type silane coupling agents, epoxy-type silane coupling agents, acryl-type silane coupling agents, and long-chain alkyl-type silane coupling agents. The silane coupling agent may be used alone, or may be used in appropriate combination of two or more thereof. Among these, long-chin alkyl-type silane coupling agents are preferable, and decyltrimethoxysilane is preferable.

When used in the present invention, the component (G) is preferably heated together with the above components (A) to (C) at a temperature of 70°C or higher to form the heat-treated mixture. Nevertheless, the component (C) may be treated with the component (G) in advance. In this case, spraying methods using a fluid nozzle, stirring methods with a shear force, dry methods with a ball mill, mixer, etc., and wet methods with an aqueous or organic solvent system, etc. can be used as the surface treatment method of the component (C) with the component (G). The stirring method is performed in a degree so that the spherical aluminum oxide powder does not break. In the drying method, a temperature in the system or a drying temperature after the treatment are appropriately set depending on the type of the surface treatment agent within a range that the surface treatment agent does not volatilize and decompose, and are 80 to 180°C.

When the component (G) is used, the usage amount thereof is preferably 0.1 to 5 parts by mass, and more preferably 1 to 5 parts by mass relative to 100 parts by mass of the component (C). The amount of 0.1 part by mass or more sufficiently exhibits the effect, and the amount of 5 parts by mass is sufficient. An amount of more than 5 parts by mass, which does not exhibit the effect corresponding to the usage amount, is not economical.

### [Component (H)]

For the inventive composition, (H) an organopolysiloxane represented by the following general formula (4), having at least one hydrolytic silyl group in one molecule and having a viscosity at 25°C of 0.01 to 30 Pa·s can be used as necessary.

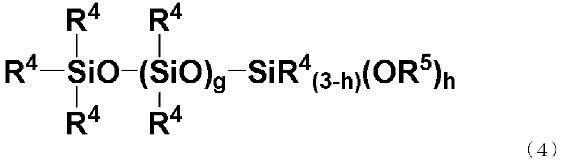

In the formula, R⁴ independently represents a non-substituted or substituted monovalent hydrocarbon group, R⁵ independently represents an alkyl group, an alkoxyalkyl group, an alkenyl group, or an acyl group, "g" represents an integer of 5 to 100, and "h" represents an integer of 1 to 3.

In the general formula (4), R⁴ independently represents a non-substituted or substituted monovalent hydrocarbon group having preferably 1 to 10, more preferably 1 to 6, further preferably 1 to 3 carbon atoms. Examples thereof include linear chain alkyl groups, branched chain alkyl groups, cyclic alkyl groups, alkenyl groups, aryl groups, aralkyl groups, and halogenated alkyl groups. Examples of the linear chain alkyl groups include a methyl group, an ethyl group, a propyl group, a hexyl group, an octyl group, and a decyl group. Examples of the branched chain alkyl groups include an isopropyl group, an isobutyl group, a tert-butyl group, and 2-ethylhexyl group. Examples of the cyclic alkyl groups include a cyclopentyl group and a cyclohexyl group. Examples of the alkenyl groups include a vinyl group and an allyl group. Examples of the aryl group include a phenyl group and a tolyl group. Examples of the aralkyl groups include a 2-phenylethyl group and a 2-methyl-2-phenylethyl group. Examples of the halogenated alkyl groups include a 3,3,3-trifluoropropyl group, a 2-(nonafluorobutyl)ethyl group, and a 2-(heptadecafluorooctyl)ethyl group. A methyl group and a phenyl group are preferable as R⁴.

In the general formula (4), R⁵ independently represents an alkyl group, an alkoxyalkyl group, an alkenyl group, or an acyl group. Examples of the alkyl group include the linear chain alkyl groups, the branched chain alkyl groups, and the cyclic alkyl groups that are the same exemplified in R⁴. Examples of the alkoxyalkyl group include a methoxyethyl group and a methoxypropyl group, and preferably have 2 to 10 carbon atoms. Examples of the alkenyl groups include the groups that are the same exemplified in the above R, and preferably have 1 to 8 carbon atoms. Examples of the acyl groups include an acetyl group and an octanoyl group, and preferably have 2 to 10 carbon atoms. R⁵ is preferably the alkyl group, and particularly preferably a methyl group or an ethyl group.

"g" represents an integer of 5 to 100, and preferably an integer of 8 to 50. "h" represents an integer of 1 to 3, and is preferably 3.

Preferable specific examples of the organopolysiloxane of the component (H) include the following compounds.

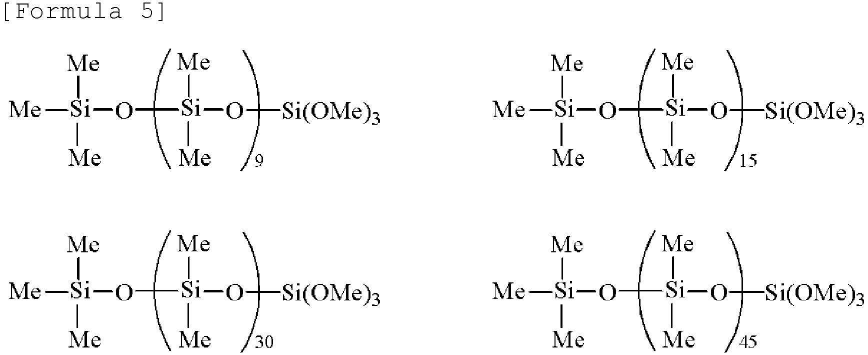

In the formulae, Me represents a methyl group. The same applies to hereinafter.

A viscosity at 25°C of the organopolysiloxane of the component (H) is typically 0.01 to 30 Pa·s,and preferably 0.01 to 10 Pa·s. When the viscosity is 0.01 Pa·s or more, the silicone composition hardly generate oil bleeding of the component (G). When the viscosity is 30 Pa·s or less, the obtained silicone composition has sufficient flowability, resulting in good application operability.

When the component (H) is used, a blend amount thereof is preferably 5 to 900 parts by mass, more preferably 10 to 900 parts by mass, and further preferably 15 to 700 parts by mass relative to 100 parts by mass of the component (A). When the blend amount of the component (H) is 5 parts by mass or more, the effect becomes sufficient. When the blend amount of the component (H) is 900 parts by mass or less, the silicone composition hardly generate oil bleeding of the component (H).

When the component (H) is blended, it is preferable that the component (H) be blended with the components (A) to (C), the mixture be heat-treated at a temperature of 70°C or higher and cooled to form the heat-treated mixture, and then the components (D), (E), and (F) be blended.

### [Other Components]

The inventive composition can be blended with various additives that themselves are known other than the above components (A) to (H) as blending components.

For example, a reaction inhibitor to regulate a curing rate and storage stability, specifically vinyl-group-containing organopolysiloxanes, such as methylvinylcyclotetrasiloxane, triallylisocyanate alkyl maleates, acetylene alcohols and silane or siloxane-modified product thereof, such as ethynylcyclohexanol; hydroperoxide, tetramethylethylenediamine, benzotriazole, colorants such as ferrous oxide and ferric oxide alone or combination thereof, and fumed silica as a thixotropy imparting agent can be blended. The blend amount is preferably 0.01 to 100,000 ppm on a mass basis in the present composition.

The inventive composition can be obtained by: heat-mixing the above components (A) to (C), and the components (G) and (H) as necessary at 70°C or higher; cooling the heat-treated mixture to preferably 0 to 50°C, more preferably to a room temperature (1 to 25°C); and adding and uniformly mixing the cooled product with the components (D), (E), and (F), and the other blending components as necessary.

A thermal conductivity of the inventive composition is 1.0 to 7.0 W/m·K, and preferably 2.2 to 7.0 W/m·K with a hot disc method in accordance with ISO 22007-2. If the thermal conductivity is too low, heat-radiation performance of heating electronic components may be insufficient. In the present invention, the thermal conductivity within the above range can be achieved by regulating the blending amount of, particularly, the component (C) within the above specified range.

A viscosity at 25°C of the inventive composition is 30 to 800 Pa·s, and preferably 30 to 700 Pa·s when measured with a spiral viscometer at a rotation number of 10 rpm. If the viscosity is too low, shape retainability of the present composition may be insufficient. If the viscosity is too high, the operability may be deteriorated. In the present invention, the viscosity within the above range can be achieved by regulating the blending amount of, particularly, the component (C) within the above specified range.

The curing condition of the inventive composition obtained above may be heating similar to a curing condition of a thermally conductive addition-curable silicone composition commonly performed, or may be curing at room temperature. When the composition is cured by heating, the heating is at typically sufficiently 80°C or higher, although depending on a desired curing time.

The cured product of the obtained inventive composition preferably has a hardness within a range of 5 to 95, particularly 10 to 90, with a Shore OO hardness meter in accordance with ASTM D 2240-05.

### [Method for Producing Composition]

The present invention also provides a method for producing a thermally conductive addition-curable silicone composition, the method comprising:
heat-treating a mixture containing the following (A) to (C) at a temperature of 70°C or higher to surface-treat the component (C) with a part of the component (B) :
   (A) 100 parts by mass of an organopolysiloxane represented by the following average composition formula (1) and having at least two alkenyl groups bonded to a silicon atom in one molecule,

      RₐR¹_{b}SiO_{(4-a-b)/2} (1)

      wherein R represents an alkenyl group, R¹ represents a non-substituted or substituted monovalent hydrocarbon group having no aliphatic unsaturated bond, "a" represents a number of 0.0001 to 0.2, "b" represents a number of 1.7 to 2.2, and "a+b" represents a number satisfying 1.9 to 2.4;
   (B) an organohydrogenpolysiloxane represented by the following average composition formula (2) and having at least three hydrogen atoms bonded to a silicon atom in one molecule at an amount of 0.1 to 2 silicon atom-bonded hydrogen atom, SiH group, in the component (B) relative to one alkenyl group in the component (A),

      R²_{c}H_{d}SiO_{(4-c-d)/2} (2)

      wherein R² represents a non-substituted or substituted monovalent hydrocarbon group having no aliphatic unsaturated bond, "c" represents 0.7 to 2.2, "d" represents 0.001 to 0.5, and "c+d" represents a positive number satisfying 0.8 to 2.5; and
   (C) 1,000 to 7,000 parts by mass of aluminum oxide whose Na⁺ ion content is determined as 100 ppm or less when a powder of the aluminum oxide is subjected to heat-extraction with pure water at 120°C for 48 hours and the water layer is measured by ion chromatography;
subsequently cooling the heat-treated mixture; and
adding and mixing the following (D) to (F) into the heat-treated mixture:
   (D) an organohydrogenpolysiloxane represented by the following average composition formula (3) and having at least two hydrogen atoms bonded to a silicon atom in one molecule at an amount of 0.01 to 3 silicon atom-bonded hydrogen atom, SiH group, in the component (D) relative to one alkenyl group in the component (A),

      R³ₑH_{f}SiO_{(4-e-f)/2} (3)

      wherein R³ represents a non-substituted or substituted monovalent hydrocarbon group having no aliphatic unsaturated bond, "e" represents 0.7 to 2.2, "f" represents 0.001 to 0.5, and "e+f" represents a positive number satisfying 0.8 to 2.5;
   (E) 1 to 200 ppm, as a platinum mass basis, of a platinum-based metal catalyst relative to 100 parts by mass of the component (A); and
   (F) 0.01 to 10 parts by mass of an ion trap agent relative to 100 parts by mass of the component (A), the ion trap agent being cation-exchange type and/or both-ions-exchange type and having at least one element supported thereon selected from Zr, Bi, Sb, Mg, and Al,
to obtain a composition having a thermal conductivity of 1.0 to 7.0 W/m·K with a hot disc method in accordance with ISO 22007-2, and having a viscosity at 25°C of 30 to 800 Pa·s when measured with a spiral viscometer at a rotation number of 10 rpm.

Such a method for producing an addition-curable silicone rubber composition can yield a thermally conductive addition-curable silicone composition with improved storability and reduced change in hardness over time. The thermally conductive addition-curable silicone, which is a cured product of the above composition, can be preferably used for protecting electric and electronic components and a circuit substrate mounting these components thereon. Therefore, the thermally conductive addition-curable silicone can exhibit excellent stress relaxation property and thermal conductivity.

In addition, preferably provided is the method for producing a thermally conductive addition-curable silicone composition, wherein a total amount of the SiH group in the component (B) and the component (D) is in a proportion of 0.11 to 5 relative to one alkenyl group in the component (A).

Such a producing method yields a stable silicone cured product having sufficient hardness, and the cured product does not become too hard and brittle.

Preferably provided is the method for producing a thermally conductive addition-curable silicone composition, wherein (G) the silane coupling agent and/or (H) the organopolysiloxane having a viscosity at 25°C of 0.01 to 30 Pa·s is further added into the mixture to be heat-treated at a temperature of 70°C of higher.

Such a method for producing an addition-curable silicone rubber composition yields a thermally conductive addition-curable silicone composition with further improved storability and reduced change in hardness over time.

(A) to (H) and the other blending components can be added and mixed as above.

### EXAMPLE

Hereinafter, the present invention will be specifically described by showing Examples and Comparative Examples. However, the present invention is not limited to the following Examples. Note that Vi represents a vinyl group in the following examples.

### [Example 1]

Into a 5-L planetary mixer manufactured by INOUE MFG., INC., 100 parts by mass of dimethylpolysiloxane blocked at both terminals of the molecular chain with dimethylvinylsiloxy groups and having a viscosity of 600 mPa·s; 1.26 parts by mass of methylhydrogen-dimethylpolysiloxane blocked with trimethylsiloxy groups, represented by the following general formula (5) and having a viscosity at 25°C of 28 mPa·s; 18 parts by mass of an organopolysiloxane represented by the following general formula (6) and having a viscosity at 25°C of 30 mPa·s; 600 parts by mass of fused spherical aluminum oxide A, whose Na⁺ ion content is determined as 57 ppm when a powder of the aluminum oxide is subjected to heat-extraction with pure water at 120°C for 48 hours and the water layer is measured by ion chromatography, the aluminum oxide A having an average particle diameter of 43 µm; and 400 parts by mass of crushed aluminum oxide B, whose Na⁺ ion content is determined as 11 ppm when a powder of the aluminum oxide is subjected to heat-extraction with pure water at 120°C for 48 hours and the water layer is measured by ion chromatography, the aluminum oxide B having an average particle diameter of 1.2 µm were added and mixed, and the mixture was mixed and heat-treated at 100°C for 1 hour.

Then, after sufficiently cooling this mixture to a room temperature, 9.4 parts by mass of methylhydrogen-dimethylpolysiloxane blocked with trimethylsiloxy groups represented by the following general formula (7) and having a viscosity at 25°C of 17 mPa·s (here, Si-H group / Si-Vi group = 0.9); 0.18 parts by mass of a vinylsiloxane complex of chloroplatinic acid (1 mass% of a Pt content); 1.00 part by mass of a both-ions-exchange type ion trap agent, IXEPLAS-A1 (manufactured by TOAGOSEI CO., LTD.); and 0.18 parts by mass of ethynylcyclohexanol were further mixed uniformly to obtain a thermally conductive addition-curable silicone composition 1.

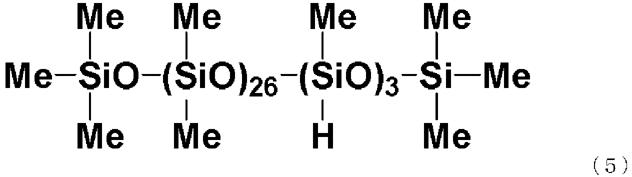

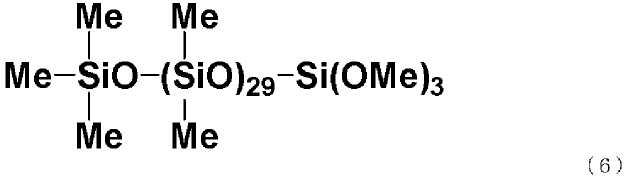

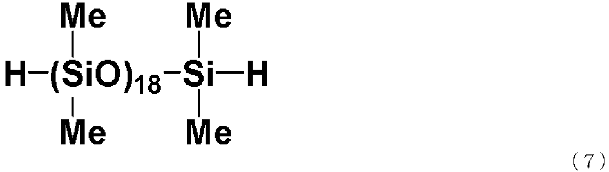

### [Comparative Example 1]

A thermally conductive addition-curable silicone composition 2 was obtained in the same manner except that the both-ions-exchange type ion trap agent, IXEPLAS-A1 (manufactured by TOAGOSEI CO., LTD.), in Example 1 was not added.

### [Comparative Example 2]

A thermally conductive addition-curable silicone composition 3 was obtained in the same manner except that the both-ions-exchange type ion trap agent, IXEPLAS-A1 (manufactured by TOAGOSEI CO., LTD.), in Example 1 was changed to 1.00 part by mass of an anion-exchange type ion trap agent, IXE500 (manufactured by TOAGOSEI CO., LTD.).

### [Comparative Example 3]

Into a 5-L planetary mixer manufactured by INOUE MFG., INC., 100 parts by mass of dimethylpolysiloxane blocked at both terminals of the molecular chain with dimethylvinylsiloxy groups and having a viscosity of 600 mPa·s; 18 parts by mass of an organopolysiloxane represented by the following general formula (6) and having a viscosity at 25°C of 30 mPa·s; 600 parts by mass of the fused spherical aluminum oxide A having an average particle diameter of 43 µm; and 400 parts by mass of the crushed aluminum oxide B having an average particle diameter of 1.2 µm were added and mixed, and the mixture was mixed and heat-treated at 150°C for 1 hour.

Then, after sufficiently cooling this mixture to a room temperature, 1.26 parts by mass of methylhydrogen-dimethylpolysiloxane blocked with trimethylsiloxy groups represented by the following general formula (5) and having a viscosity at 25°C of 28 mPa·s; 9.4 parts by mass of methylhydrogen-dimethylpolysiloxane blocked with trimethylsiloxy groups represented by the following general formula (7) and having a viscosity at 25°C of 17 mPa·s (here, Si-H group / Si-Vi group = 0.9); 0.18 parts by mass of a vinylsiloxane complex of chloroplatinic acid (1 mass% of a Pt content); 1.00 part by mass of a both-ions-exchange type ion trap agent, IXEPLAS-A1 (manufactured by TOAGOSEI CO., LTD.); and 0.18 parts by mass of ethynylcyclohexanol were further mixed uniformly to obtain a thermally conductive addition-curable silicone composition 4.

### [Comparative Example 4]

A thermally conductive addition-curable silicone composition 5 was obtained in the same manner except that the heat treatment temperature described in Example 1 was changed to 50°C.

### [Comparative Example 5]

A thermally conductive addition-curable silicone composition 6 was obtained in the same manner except that the fumed spherical aluminum oxide A described in Example 1 was replaced with fused spherical aluminum oxide C, whose Na⁺ ion content is determined as 111 ppm when a powder of the aluminum oxide is subjected to heat-extraction with pure water at 120°C for 48 hours and the water layer is measured by ion chromatography, the aluminum oxide C having an average particle diameter of 41 µm.

### [Example 2]

Into a 5-L planetary mixer manufactured by INOUE MFG., INC., 100 parts by mass of dimethylpolysiloxane blocked at both terminals of the molecular chain with dimethylvinylsiloxy groups and having a viscosity of 400 mPa·s; 2.33 parts by mass of methylhydrogen-dimethylpolysiloxane blocked with trimethylsiloxy groups represented by the general formula (5) and having a viscosity at 25°C of 28 mPa·s; 234 parts by mass of an organopolysiloxane represented by the general formula (6) and having a viscosity at 25°C of 30 mPa·s; 4,836 parts by mass of fused spherical aluminum oxide D, whose Na⁺ ion content is determined as 52 ppm when a powder of the aluminum oxide is subjected to heat-extraction with pure water at 60°C for 24 hours and the water layer is measured by ion chromatography, the aluminum oxide D having an average particle diameter of 60 µm; and 1,814 parts by mass of the crushed aluminum oxide B having an average particle diameter of 1.2 µm were added and mixed, and the mixture was mixed and heat-treated at 100°C for 1 hour.

Then, after sufficiently cooling this mixture to a room temperature, 13.0 parts by mass of methylhydrogen-dimethylpolysiloxane blocked with trimethylsiloxy groups represented by the general formula (7) and having a viscosity at 25°C of 17 mPa·s (here, Si-H group / Si-Vi group = 1.0); 1.00 part by mass of a vinylsiloxane complex of chloroplatinic acid (1 mass% of a Pt content); 2.00 parts by mass of a both-ions-exchange type ion trap agent, IXEPLAS-A1 (manufactured by TOAGOSEI CO., LTD.); and 1.00 part by mass of ethynylcyclohexanol were further mixed uniformly to obtain a thermally conductive addition-curable silicone composition 7.

### [Comparative Example 6]

A thermally conductive addition-curable silicone composition 8 was obtained in the same manner except that the both-ions-exchange type ion trap agent, IXEPLAS-A1 (manufactured by TOAGOSEI CO., LTD.), in Example 2 was not added.

### [Comparative Example 7]

A thermally conductive addition-curable silicone composition 9 was obtained in the same manner except that the both-ions-exchange type ion trap agent, IXEPLAS-A1 (manufactured by TOAGOSEI CO., LTD.), in Example 2 was changed to 2.00 parts by mass of an anion-exchange type ion trap agent, IXE500 (manufactured by TOAGOSEI CO., LTD.).

### [Comparative Example 8]

Into a 5-L planetary mixer manufactured by INOUE MFG., INC., 100 parts by mass of dimethylpolysiloxane blocked at both terminals of the molecular chain with dimethylvinylsiloxy groups and having a viscosity of 400 mPa·s; 234 parts by mass of an organopolysiloxane represented by the following general formula (6) and having a viscosity at 25°C of 30 mPa·s; 4,836 parts by mass of the fused spherical aluminum oxide D having an average particle diameter of 60 µm; and 1,814 parts by mass of the crushed aluminum oxide B having an average particle diameter of 1.2 µm were added and mixed, and the mixture was mixed and heat-treated at 150°C for 1 hour.

Then, after sufficiently cooling this mixture to a room temperature, 2.33 parts by mass of methylhydrogen-dimethylpolysiloxane blocked with trimethylsiloxy groups represented by the following general formula (5) and having a viscosity at 25°C of 28 mPa·s; 13.0 parts by mass of methylhydrogen-dimethylpolysiloxane blocked with trimethylsiloxy groups represented by the general formula (7) and having a viscosity at 25°C of 17 mPa·s (here, Si-H group / Si-Vi group = 1.0); 1.00 part by mass of a vinylsiloxane complex of chloroplatinic acid (1 mass% of a Pt content); and 1.00 part by mass of ethynylcyclohexanol were further mixed uniformly to obtain a thermally conductive addition-curable silicone composition 10.

### [Comparative Example 9]

A thermally conductive addition-curable silicone composition 11 was obtained in the same manner except that the heat treatment temperature described in Example 2 was changed to 50°C.

### [Comparative Example 10]

A thermally conductive addition-curable silicone composition 12 was obtained in the same manner except that the fumed spherical aluminum oxide A described in Example 2 was replaced with fused spherical aluminum oxide E, whose Na⁺ ion content is determined as 108 ppm when a powder of the aluminum oxide is subjected to heat-extraction with pure water at 120°C for 48 hours and the water layer is measured by ion chromatography, the aluminum oxide E having an average particle diameter of 61 µm.

Of the obtained thermally conductive addition-curable silicone rubber compositions 1 to 12, an initial viscosity, thermal conductivity, and hardness were measured by the following method. Furthermore, the compositions 1 to 12 were stored at 5°C for 6 months, and then the same measurements were performed. Table 1 shows the results.

### [Viscosity]

A viscosity at 25°C was measured with a spiral viscometer at a rotation number of 10 rpm.

### [Thermal Conductivity]

A thermal conductivity was measured with a hot disc method in accordance with ISO 22007-2.

### [Hardness]

The inventive compositions obtained above were cured under a curing condition similar to a method commonly performed in a thermally conductive addition-curable silicone composition. Cured products of the obtained inventive compositions were measured with a Shore OO hardness meter in accordance with ASTM D 2240-05.

**[Table 1]**

| Measured physical property | Example 1 | Comparative Example 1 | Comparative Example 2 | Comparative Example 3 |
|---|---|---|---|---|
| Viscosity (Pa·s): initial | 114 | 112 | 115 | 110 |
| Thermal conductivity (W/m·K): initial | 2.3 | 2.3 | 2.3 | 2.3 |
| Hardness (Shore OO): initial | 61 | 60 | 62 | 61 |
| Viscosity (Pa·s): after storage at 5°C for 6 months | 113 | 114 | 118 | 111 |
| Thermal conductivity (W/m·K): after storage at 5°C for 6 months | 2.3 | 2.3 | 2.3 | 2.3 |
| Hardness (Shore OO): after storage at 5°C for 6 months | 61 | 40 | 41 | 49 |

| Measured physical property | Comparative Example 4 | Comparative Example 5 |
|---|---|---|
| Viscosity (Pa·s): initial | 113 | 119 |
| Thermal conductivity (W/m·K): initial | 2.3 | 2.3 |
| Hardness (Shore OO): initial | 60 | 58 |
| Viscosity (Pa·s): after storage at 5°C for 6 months | 113 | 121 |
| Thermal conductivity (W/m·K): after storage at 5°C for 6 months | 2.3 | 2.3 |
| Hardness (Shore OO): after storage at 5°C for 6 months | 48 | 47 |

| Measured physical property | Example 2 | Comparative Example 6 | Comparative Example 7 | Comparative Example 8 |
|---|---|---|---|---|
| Viscosity (Pa·s): initial | 292 | 294 | 299 | 292 |
| Thermal conductivity (W/m·K): initial | 6.6 | 6. 6 | 6.6 | 6.6 |
| Hardness (Shore OO): initial | 62 | 60 | 61 | 61 |
| Viscosity (Pa·s): after storage at 5°C for 6 months | 301 | 298 | 309 | 303 |
| Thermal conductivity (W/m·K): after storage at 5°C for 6 months | 6.6 | 6. 6 | 6.6 | 6.6 |
| Hardness (Shore OO): after storage at 5°C for 6 months | 62 | 33 | 33 | 50 |

| Measured physical property | Comparative Example 9 | Comparative Example 10 |
|---|---|---|
| Viscosity (Pa·s): initial | 305 | 300 |
| Thermal conductivity (W/m·K): initial | 6.6 | 6. 6 |
| Hardness (Shore OO): initial | 59 | 58 |
| Viscosity (Pa·s): after storage at 5°C for 6 months | 312 | 302 |
| Thermal conductivity (W/m·K): after storage at 5°C for 6 months | 6.6 | 6. 6 |
| Hardness (Shore OO): after storage at 5°C for 6 months | 46 | 45 |

From the above results, Examples 1 and 2 obviously exhibit good storability. It is found that the storability is significantly different depending on the presence or absence of the both-ions-exchange type ion trap agent (Comparative Examples 1 and 6), and the anion-exchange type ion trap agent has no effect (Comparative Examples 2 and 7). When the composition was stored in the long term, obvious change in the viscosity or the thermal conductivity is not observed regardless of the presence or absence of the treatment agent that can treat the surface of the thermally conductive filler: the component (B); however, change in the hardness from the beginning over time is observed as large as 10 points or more (Comparative Examples 3 and 8). In addition, it is also found that the amount of Na⁺ ion specified with the component (C) is preferably 100 ppm or less (Comparative Examples 5 and 10), and the heat treatment temperature after mixing the component (A), the component (B), and the component (C) is preferably 70°C or higher (Comparative Examples 4 and 9). This is presumably because the treatment on the surface of the component (C) with the component (B) is not proceeded. Therefore, the inventive producing method can yield a thermally conductive addition-curable silicone composition having the storage stability in a long term, and a cured product thereof.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

### Industrial Applicability

The thermally conductive silicone obtained by curing the thermally conductive silicone composition obtained by the inventive producing method can maintain the stable hardness without the effect of the thermally conductive filler even when stored in a long term. Therefore, the thermally conductive silicone is promising for improvement in reliability in use of a heat radiator-cum-protector of electronic components such as power devices, transistors, thyristors, and central processing units (CPUs).

## Claims

1. A thermally conductive addition-curable silicone composition, comprising:
a heat-treated mixture comprising the following (A) to (C):
(A) 100 parts by mass of an organopolysiloxane represented by the following average composition formula (1) and having at least two alkenyl groups bonded to a silicon atom in one molecule,
RₐR¹_{b}SiO_{(4-a-b)/2} (1)
wherein R represents an alkenyl group, R¹ represents a non-substituted or substituted monovalent hydrocarbon group having no aliphatic unsaturated bond, "a" represents a number of 0.0001 to 0.2, "b" represents a number of 1.7 to 2.2, and "a+b" represents a number satisfying 1.9 to 2.4;
(B) an organohydrogenpolysiloxane represented by the following average composition formula (2) and having at least three hydrogen atoms bonded to a silicon atom in one molecule at an amount of 0.1 to 2 silicon atom-bonded hydrogen atoms, SiH groups, in the component (B) relative to one alkenyl group in the component (A),
R²_{c}H_{d}SiO_{(4-c-d)/2} (2)
wherein R² represents a non-substituted or substituted monovalent hydrocarbon group having no aliphatic unsaturated bond, "c" represents 0.7 to 2.2, "d" represents 0.001 to 0.5, and "c+d" represents a positive number satisfying 0.8 to 2.5; and
(C) 1,000 to 7,000 parts by mass of aluminum oxide whose Na⁺ ion content is determined as 100 ppm or less when a powder of the aluminum oxide is subjected to heat-extraction with pure water at 120°C for 48 hours and the water layer is measured by ion chromatography, wherein
the component (C) is surface-treated with a part of the component (B); and, along with the heat-treated mixture,
(D) an organohydrogenpolysiloxane represented by the following average composition formula (3) and having at least two hydrogen atoms bonded to a silicon atom in one molecule at an amount of 0.01 to 3 silicon atom-bonded hydrogen atoms, SiH groups, in the component (D) relative to one alkenyl group in the component (A),
R³ₑH_{f}SiO_{(4-e-f)/2} (3)
wherein R³ represents a non-substituted or substituted monovalent hydrocarbon group having no aliphatic unsaturated bond, "e" represents 0.7 to 2.2, "f" represents 0.001 to 0.5, and "e+f" represents a positive number satisfying 0.8 to 2.5;
(E) 1 to 200 ppm, as a platinum mass basis, of a platinum-based metal catalyst relative to 100 parts by mass of the component (A); and
(F) 0.01 to 10 parts by mass of an ion trap agent relative to 100 parts by mass of the component (A), the ion trap agent being cation-exchange type and/or both-ions-exchange type and having at least one element supported thereon selected from Zr, Bi, Sb, Mg, and Al, wherein
the composition has a thermal conductivity of 1.0 to 7.0 W/m·K measured with a hot disc method in accordance with ISO 22007-2, and the composition has a viscosity at 25°C of 30 to 800 Pa·s when measured with a spiral viscometer at a rotation number of 10 rpm.

2. The thermally conductive addition-curable silicone composition according to claim 1, wherein a total amount of the SiH group in the component (B) and the component (D) is in a proportion of 0.11 to 5 relative to one alkenyl group in the component (A).

3. The thermally conductive addition-curable silicone composition according to claim 1 or 2, wherein the heat-treated mixture is a heat-treated mixture of:
the components (A) to (C); and
(G) a silane coupling agent and/or (H) an organopolysiloxane represented by the following general formula (4) and having a viscosity at 25°C of 0.01 to 30 Pa·s, 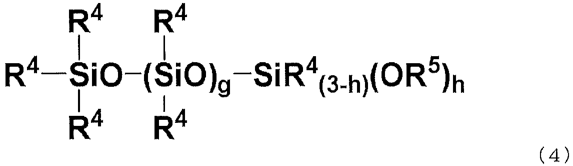
wherein R⁴ independently represents a non-substituted or substituted monovalent hydrocarbon group, R⁵ independently represents an alkyl group, an alkoxyalkyl group, an alkenyl group, or an acyl group, "g" represents an integer of 5 to 100, and "h" represents an integer of 1 to 3.

4. A method for producing a thermally conductive addition-curable silicone composition, the method comprising:
heat-treating a mixture containing the following (A) to (C) at a temperature of 70°C or higher to surface-treat the component (C) with a part of the component (B):
(A) 100 parts by mass of an organopolysiloxane represented by the following average composition formula (1) and having at least two alkenyl groups bonded to a silicon atom in one molecule,
RₐR¹₃SiO_{(4-a-b)/2} (1)
wherein R represents an alkenyl group, R¹ represents a non-substituted or substituted monovalent hydrocarbon group having no aliphatic unsaturated bond, "a" represents a number of 0.0001 to 0.2, "b" represents a number of 1.7 to 2.2, and "a+b" represents a number satisfying 1.9 to 2.4;
(B) an organohydrogenpolysiloxane represented by the following average composition formula (2) and having at least three hydrogen atoms bonded to a silicon atom in one molecule at an amount of 0.1 to 2 silicon atom-bonded hydrogen atom, SiH group, in the component (B) relative to one alkenyl group in the component (A),
R²_{c}H_{d}SiO_{(4-c-d)/2} (2)
wherein R² represents a non-substituted or substituted monovalent hydrocarbon group having no aliphatic unsaturated bond, "c" represents 0.7 to 2.2, "d" represents 0.001 to 0.5, and "c+d" represents a positive number satisfying 0.8 to 2.5; and
(C) 1,000 to 7,000 parts by mass of aluminum oxide whose Na⁺ ion content is determined as 100 ppm or less when a powder of the aluminum oxide is subjected to heat-extraction with pure water at 120°C for 48 hours and the water layer is measured by ion chromatography;
subsequently cooling the heat-treated mixture; and
adding and mixing the following (D) to (F) into the heat-treated mixture:
(D) an organohydrogenpolysiloxane represented by the following average composition formula (3) and having at least two hydrogen atoms bonded to a silicon atom in one molecule at an amount of 0.01 to 3 silicon atom-bonded hydrogen atom, SiH group, in the component (D) relative to one alkenyl group in the component (A),
R³ₑH_{f}SiO_{(4-e-f)/2} (3)
wherein R³ represents a non-substituted or substituted monovalent hydrocarbon group having no aliphatic unsaturated bond, "e" represents 0.7 to 2.2, "f" represents 0.001 to 0.5, and "e+f" represents a positive number satisfying 0.8 to 2.5;
(E) 1 to 200 ppm, as a platinum mass basis, of a platinum-based metal catalyst relative to 100 parts by mass of the component (A); and
(F) 0.01 to 10 parts by mass of an ion trap agent relative to 100 parts by mass of the component (A), the ion trap agent being cation-exchange type and/or both-ions-exchange type and having at least one element supported thereon selected from Zr, Bi, Sb, Mg, and Al,
to obtain a composition having a thermal conductivity of 1.0 to 7.0 W/m·K measured with a hot disc method in accordance with ISO 22007-2, and having a viscosity at 25°C of 30 to 800 Pa·s when measured with a spiral viscometer at a rotation number of 10 rpm.

5. The method for producing a thermally conductive addition-curable silicone composition according to claim 4, wherein a total amount of the SiH group in the component (B) and the component (D) is in a proportion of 0.11 to 5 relative to one alkenyl group in the component (A).

6. The method for producing a thermally conductive addition-curable silicone composition according to claim 4 or 5, wherein (G) a silane coupling agent and/or (H) an organopolysiloxane represented by the following general formula (4) and having a viscosity at 25°C of 0.01 to 30 Pa·s is further added into the mixture to be heat-treated at a temperature of 70°C of higher 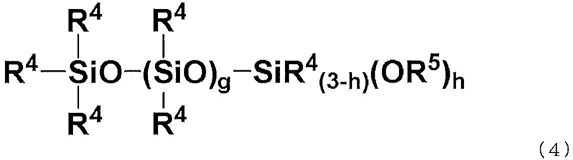 wherein R⁴ independently represents a non-substituted or substituted monovalent hydrocarbon group, R⁵ independently represents an alkyl group, an alkoxyalkyl group, an alkenyl group, or an acyl group, "g" represents an integer of 5 to 100, and "h" represents an integer of 1 to 3.

## Patentansprüche

1. Wärmeleitende additionsvernetzende Siliconzusammensetzung, umfassend:
eine wärmebehandelte Mischung, die die folgenden (A) bis (C) enthält:
(A) 100 Masseteile eines Organopolysiloxans, das durch die folgende durchschnittliche Zusammensetzungsformel (1) repräsentiert wird und mindestens zwei an ein Siliciumatom gebundene Alkenylgruppen in einem Molekül aufweist,
RₐR¹ₑSiO_{(4-a-b)/2} (1)
wobei R eine Alkenylgruppe repräsentiert, R¹ eine unsubstituierte oder substituierte einwertige Kohlenwasserstoffgruppe ohne aliphatische ungesättigte Bindung repräsentiert, "a" eine Zahl von 0,0001 bis 0,2 repräsentiert, "b" eine Zahl von 1,7 bis 2,2 repräsentiert und "a+b" eine Zahl repräsentiert, die 1,9 bis 2,4 erfüllt;
(B) ein Organohydrogenpolysiloxan, das durch die folgende durchschnittliche Zusammensetzungsformel (2) repräsentiert wird und mindestens drei an ein Siliciumatom gebundene Wasserstoffatome in einem Molekül in einer Menge von 0,1 bis 2 an ein Siliciumatom gebundenen Wasserstoffatomen, SiH-Gruppen, in der Komponente (B), bezogen auf eine Alkenylgruppe in der Komponente (A), aufweist,
R²_{c}H_{d}SiO_{(4-c-d)/2} (2)
wobei R² eine unsubstituierte oder substituierte einwertige Kohlenwasserstoffgruppe ohne aliphatische ungesättigte Bindung repräsentiert, "c" 0,7 bis 2,2 repräsentiert, "d" 0,001 bis 0,5 repräsentiert und "c+d" eine positive Zahl repräsentiert, die 0,8 bis 2,5 erfüllt; und
(C) 1.000 bis 7.000 Masseteile Aluminiumoxid, dessen Na⁺ -Ionengehalt als 100 ppm oder weniger bestimmt wird, wenn ein Pulver des Aluminiumoxids 48 Stunden lang einer Wärmeextraktion mit reinem Wasser bei 120° C unterzogen wird und die Wasserschicht durch Ionenchromatographie gemessen wird, wobei
die Komponente (C) mit einem Teil der Komponente (B) oberflächenbehandelt wird; und zusammen mit der wärmebehandelten Mischung,
(D) ein Organohydrogenpolysiloxan, das durch die folgende durchschnittliche Zusammensetzungsformel (3) repräsentiert wird und mindestens zwei an ein Siliciumatom gebundene Wasserstoffatome in einem Molekül in einer Menge von 0,01 bis 3 an ein Siliciumatom gebundenen Wasserstoffatomen, SiH-Gruppen, in der Komponente (D), bezogen auf eine Alkenylgruppe in der Komponente (A), aufweist,
R³ₑH_{f}SiO_{(4-e-f)/2} (3)
wobei R³ eine unsubstituierte oder substituierte einwertige Kohlenwasserstoffgruppe ohne aliphatische ungesättigte Bindung repräsentiert, "e" 0,7 bis 2,2 repräsentiert, "f" 0,001 bis 0,5 repräsentiert und "e+f" eine positive Zahl repräsentiert, die 0,8 bis 2,5 erfüllt;
(E) 1 bis 200 ppm, als eine Platinmassebasis, eines Metallkatalysators auf Platinbasis, bezogen auf 100 Masseteile der Komponente (A); und
(F) 0,01 bis 10 Masseteile eines Ionenfallenmittels, bezogen auf 100 Masseteile der Komponente (A), wobei das Ionenfallenmittel vom Kationenaustauschertyp und/oder Beiden-Ionen-Austauschertyp ist und mindestens ein darauf getragenes Element, ausgewählt aus Zr, Bi, Sb, Mg und Al, aufweist, wobei
die Zusammensetzung eine Wärmeleitfähigkeit von 1,0 bis 7,0 W/m·K, gemessen mit einem Hot-Disk-Verfahren gemäß ISO 22007-2 aufweist und die Zusammensetzung eine Viskosität bei 25° C von 30 bis 800 Pa· s aufweist, wenn sie mit einem Spiralviskosimeter bei einer Umdrehungszahl von 10 U/min gemessen wird.

2. Wärmeleitende additionsvernetzende Siliconzusammensetzung nach Anspruch 1, wobei die Gesamtmenge der SiH-Gruppe in der Komponente (B) und der Komponente (D) in einem Verhältnis von 0,11 bis 5 relativ zu einer Alkenylgruppe in der Komponente (A) steht.

3. Wärmeleitende additionsvernetzende Siliconzusammensetzung nach Anspruch 1 oder 2, wobei die wärmebehandelte Mischung eine wärmebehandelte Mischung aus den folgenden ist:
den Komponenten (A) bis (C); und
(G) einem Silan-Kopplungsmittel und/oder (H) einem Organopolysiloxan, das durch die folgende allgemeine Formel (4) repräsentiert wird und eine Viskosität bei 25° C von 0,01 bis 30 Pa· s aufweist, 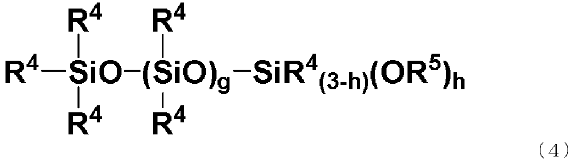
wobei R⁴ unabhängig eine unsubstituierte oder substituierte einwertige Kohlenwasserstoffgruppe repräsentiert, R⁵ unabhängig eine Alkylgruppe, eine Alkoxyalkylgruppe, eine Alkenylgruppe oder eine Acylgruppe repräsentiert, "g" eine ganze Zahl von 5 bis 100 repräsentiert und "h" eine ganze Zahl von 1 bis 3 repräsentiert.

4. Verfahren zur Herstellung einer wärmeleitfähigen, additionsvernetzenden Siliconzusammensetzung, wobei das Verfahren umfasst:
Wärmebehandeln einer Mischung, die die folgenden (A) bis (C) enthält, bei einer Temperatur von 70° C oder höher, um die Komponente (C) mit einem Teil der Komponente (B) oberflächenzubehandeln:
(A) 100 Masseteile eines Organopolysiloxans, das durch die folgende durchschnittliche Zusammensetzungsformel (1) repräsentiert wird und mindestens zwei an ein Siliciumatom gebundene Alkenylgruppen in einem Molekül aufweist,
RₐR¹_{b}SiO_{(4-a-b)/2} (1)
wobei R eine Alkenylgruppe repräsentiert, R¹ eine unsubstituierte oder substituierte einwertige Kohlenwasserstoffgruppe ohne aliphatische ungesättigte Bindung repräsentiert, "a" eine Zahl von 0,0001 bis 0,2 repräsentiert, "b" eine Zahl von 1,7 bis 2,2 repräsentiert und "a+b" eine Zahl repräsentiert, die 1,9 bis 2,4 erfüllt;
(B) ein Organohydrogenpolysiloxan, das durch die folgende durchschnittliche Zusammensetzungsformel (2) repräsentiert wird und mindestens drei an ein Siliciumatom gebundene Wasserstoffatome in einem Molekül in einer Menge von 0,1 bis 2 an ein Siliciumatom gebundenen Wasserstoffatomen, eine SiH-Gruppe, in der Komponente (B), bezogen auf eine Alkenylgruppe in der Komponente (A), aufweist,
R²_{c}H_{d}SiO_{(4-c-d)/2} (2)
wobei R² eine unsubstituierte oder substituierte einwertige Kohlenwasserstoffgruppe ohne aliphatische ungesättigte Bindung repräsentiert, "c" 0,7 bis 2,2 repräsentiert, "d" 0,001 bis 0,5 repräsentiert und "c+d" eine positive Zahl repräsentiert, die 0,8 bis 2,5 erfüllt; und
(C) 1.000 bis 7.000 Masseteile Aluminiumoxid, dessen Na⁺ -Ionengehalt als 100 ppm oder weniger bestimmt wird, wenn ein Pulver des Aluminiumoxids 48 Stunden lang einer Wärmeextraktion mit reinem Wasser bei 120° C unterzogen wird und die Wasserschicht durch Ionenchromatographie gemessen wird, wobei
die wärmebehandelte Mischung anschließend gekühlt wird; und
die folgenden (D) bis (F) in die wärmebehandelte Mischung zugegeben und gemischt werden:
(D) ein Organohydrogenpolysiloxan, das durch die folgende durchschnittliche Zusammensetzungsformel (3) repräsentiert wird und mindestens zwei an ein Siliciumatom gebundene Wasserstoffatome in einem Molekül in einer Menge von 0,01 bis 3 an ein Siliciumatom gebundenen Wasserstoffatomen, eine SiH-Gruppe, in der Komponente (D), bezogen auf eine Alkenylgruppe in der Komponente (A), aufweist,
R³ₑH_{f}SiO_{(4-e-f)/2} (3)
wobei R³ eine unsubstituierte oder substituierte einwertige Kohlenwasserstoffgruppe ohne aliphatische ungesättigte Bindung repräsentiert, "e" 0,7 bis 2,2 repräsentiert, "f" 0,001 bis 0,5 repräsentiert und "e+f" eine positive Zahl repräsentiert, die 0,8 bis 2,5 erfüllt;
(E) 1 bis 200 ppm, als eine Platinmassebasis, eines Metallkatalysators auf Platinbasis, bezogen auf 100 Masseteile der Komponente (A); und
(F) 0,01 bis 10 Masseteile eines Ionenfallenmittels, bezogen auf 100 Masseteile der Komponente (A), wobei das Ionenfallenmittel vom Kationenaustauschertyp und/oder Beiden-Ionen-Austauschertyp ist und mindestens ein darauf getragenes Element, ausgewählt aus Zr, Bi, Sb, Mg und Al, aufweist,
um eine Zusammensetzung zu erhalten, die eine Wärmeleitfähigkeit von 1,0 bis 7,0 W/m· K, gemessen mit einem Hot-Disk-Verfahren gemäß ISO 22007-2 aufweist und eine Viskosität bei 25° C von 30 bis 800 Pa· s aufweist, wenn sie mit einem Spiralviskosimeter bei einer Umdrehungszahl von 10 U/min gemessen wird.

5. Verfahren zur Herstellung einer wärmeleitfähigen additionsvernetzbaren Siliconzusammensetzung nach Anspruch 4, wobei die Gesamtmenge der SiH-Gruppe in der Komponente (B) und der Komponente (D) in einem Verhältnis von 0,11 bis 5 relativ zu einer Alkenylgruppe in der Komponente (A) steht.

6. Verfahren zur Herstellung einer wärmeleitfähigen additionsvernetzbaren Siliconzusammensetzung nach Anspruch 4 oder 5, wobei (G) ein Silan-Kopplungsmittel und/oder (H) ein Organopolysiloxan, das durch die folgende allgemeine Formel (4) repräsentiert wird und eine Viskosität bei 25° C von 0,01 bis 30 Pa· s aufweist, weiterhin zu der Mischung gegeben wird, die bei einer Temperatur von 70° C oder höher wärmebehandelt werden soll 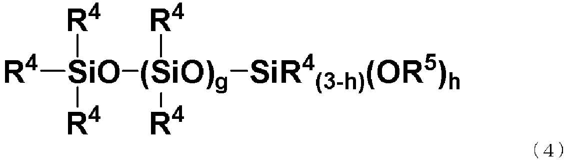 wobei R⁴ unabhängig eine unsubstituierte oder substituierte einwertige Kohlenwasserstoffgruppe repräsentiert, R⁵ unabhängig eine Alkylgruppe, eine Alkoxyalkylgruppe, eine Alkenylgruppe oder eine Acylgruppe repräsentiert, "g" eine ganze Zahl von 5 bis 100 repräsentiert und "h" eine ganze Zahl von 1 bis 3 repräsentiert.

## Revendications

1. Composition de silicone thermoconductrice à durcissement par addition, comprenant :
un mélange traité thermiquement comprenant les éléments (A) à (C) suivants :
(A) 100 parties en masse d'un organopolysiloxane représenté par la formule de composition moyenne (1) suivante et comportant au moins deux groupes alcényles liés à un atome de silicium dans une molécule,
RₐR¹_{b}SiO_{(4-a-b)/2} (1)
dans laquelle R représente un groupe alcényle, R¹ représente un groupe hydrocarboné monovalent, non substitué ou substitué, sans liaison aliphatique insaturée, « a » représente un nombre de 0,0001 à 0,2, « b » représente un nombre de 1,7 à 2,2, et « a+b » représente un nombre satisfaisant 1,9 à 2,4 ;
(B) un organohydrogénopolysiloxane représenté par la formule de composition moyenne (2) suivante et comportant au moins trois atomes d'hydrogène liés à un atome de silicium dans une molécule, en une quantité de 0,1 à 2 atomes d'hydrogène liés à un atome de silicium, groupes SiH, dans le constituant (B) par rapport à un groupe alcényle dans le constituant (A),
R²_{c}H_{d}SiO_{(4-c-d)/2} (2)
dans laquelle R² représente un groupe hydrocarboné monovalent, substitué ou non substitué, sans liaison aliphatique insaturée, « c » représente 0,7 à 2,2, « d » représente 0,001 à 0,5 et « c+d » représente un nombre positif satisfaisant 0,8 à 2,5 ; et
(C) 1 000 à 7 000 parties en masse d'oxyde d'aluminium dont la teneur en ions Na⁺ est déterminée comme étant de 100 ppm ou moins lorsqu'une poudre de l'oxyde d'aluminium est soumise à une extraction thermique avec de l'eau pure à 120 °C pendant 48 heures et que la couche aqueuse est mesurée par chromatographie par échange d'ions, dans laquelle
le constituant (C) est traité en surface avec une partie du constituant (B) ; et, avec le mélange traité thermiquement,
(D) un organohydrogénopolysiloxane représenté par la formule de composition moyenne (3) suivante et comportant au moins deux atomes d'hydrogène liés à un atome de silicium dans une molécule, en une quantité de 0,01 à 3 atomes d'hydrogène liés à un atome de silicium, groupes SiH, dans le constituant (D) par rapport à un groupe alcényle dans le constituant (A),
R³ₑH_{f}SiO(_{4-e-f)/2} (3)
dans laquelle R³ représente un groupe hydrocarboné monovalent, substitué ou non substitué, sans liaison aliphatique insaturée, « e » représente 0,7 à 2,2, « f » représente 0,001 à 0,5 et « e+f » représente un nombre positif satisfaisant 0,8 à 2,5 ;
(E) 1 à 200 ppm, en masse de platine, d'un catalyseur métallique à base de platine par rapport à 100 parties en masse du constituant (A) ; et
(F) 0,01 à 10 parties en masse d'un agent piège à ions par rapport à 100 parties en masse du constituant (A), l'agent piège à ions étant de type échangeur de cations et/ou des deux types d'échange d'ions et comportant au moins un élément supporté sur celui dernier choisi parmi le Zr, le Bi, le Sb, le Mg et l'Al,
dans laquelle la composition présente une conductivité thermique de 1,0 à 7,0 w/m.K, mesurée par une méthode du disque chaud conformément à la norme ISO 22007-2, et la composition présente une viscosité à 25 °C de 30 à 800 Pa.s, lorsqu'elle est mesurée avec un viscosimètre à spirale à une vitesse de rotation de 10 tr/min.

2. Composition de silicone thermoconductrice à durcissement par addition selon la revendication 1, dans laquelle une quantité totale du groupe SiH dans le constituant (B) et le constituant (D) est dans une proportion de 0,11 à 5 par rapport à un groupe alcényle dans le constituant (A).

3. Composition de silicone thermoconductrice à durcissement par addition selon la revendication 1 ou 2, dans laquelle le mélange traité thermiquement est un mélange traité thermiquement :
des constituants (A) à (C) ; et
(G) d'un agent de couplage silane et/ou
(H) d'un organopolysiloxane représenté par la formule générale (4) suivante et présentant une viscosité à 25 °C de 0,01 à 30 Pa·s, 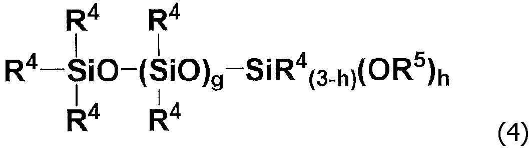
dans laquelle R⁴ représente indépendamment un groupe hydrocarboné monovalent substitué ou non substitué, R⁵ représente indépendamment un groupe alkyle, un groupe alcoxyalkyle, un groupe alcényle ou un groupe acyle, « g » représente un nombre entier de 5 à 100 et « h » représente un nombre entier de 1 à 3.

4. Procédé de production d'une composition de silicone thermoconductrice à durcissement par addition, le procédé comprenant :
le traitement thermique d'un mélange contenant les éléments (A) à (C) suivants à une température de 70 °C ou plus pour traiter en surface le constituant (C) avec une partie du constituant (B) :
(A) 100 parties en masse d'un organopolysiloxane représenté par la formule de composition moyenne (1) suivante et comportant au moins deux groupes alcényle lié à un atome de silicium dans une molécule,
RₐR¹_{b}SiO_{(4-a-b)/2} (1)
dans laquelle R représente un groupe alcényle, R¹ représente un groupe hydrocarboné monovalent, non substitué ou substitué, sans liaison aliphatique insaturée, « a » représente un nombre de 0,0001 à 0,2, « b » représente un nombre de 1,7 à 2,2, et « a+b » représente un nombre satisfaisant 1,9 à 2,4 ;
(B) un organohydrogénopolysiloxane représenté par la formule de composition moyenne (2) suivante et comportant au moins trois atomes d'hydrogène liés à un atome de silicium dans une molécule, en une quantité de 0,1 à 2 atomes d'hydrogène liés à un atome de silicium, groupe SiH, dans le constituant (B) par rapport à un groupe alcényle dans le constituant (A),
R²_{c}H_{d}SiO_{(4-c-d)/2} (2)
dans laquelle R² représente un groupe hydrocarboné monovalent, substitué ou non substitué, sans liaison aliphatique insaturée, « c » représente 0,7 à 2,2, « d » représente 0,001 à 0,5 et « c+d » représente un nombre positif satisfaisant 0,8 à 2,5 ; et
(C) 1 000 à 7 000 parties en masse d'oxyde d'aluminium dont la teneur en ions Na⁺ est déterminée comme étant de 100 ppm ou moins lorsqu'une poudre de l'oxyde d'aluminium est soumise à une extraction thermique avec de l'eau pure à 120 °C pendant 48 heures et que la couche aqueuse est mesurée par chromatographie par échange d'ions ;
le refroidissement ensuite du mélange traité thermiquement ; et
l'ajout et le mélange des éléments (D) à (F) suivants au mélange traité thermiquement :
(D) un organohydrogénopolysiloxane représenté par la formule de composition moyenne (3) suivante et comportant au moins deux atomes d'hydrogène liés à un atome de silicium dans une molécule, en une quantité de 0,01 à 3 atomes d'hydrogène liés à un atome de silicium, groupe SiH, dans le constituant (D) par rapport à un groupe alcényle dans le constituant (A),
R³ₑH_{f}SiO_{(4-e-f)/2} (3)
dans laquelle R³ représente un groupe hydrocarboné monovalent, substitué ou non substitué, sans liaison aliphatique insaturée, « e » représente 0,7 à 2,2, « f » représente 0,001 à 0,5 et « e+f » représente un nombre positif satisfaisant 0,8 à 2,5 ;
(E) 1 à 200 ppm, en masse de platine, d'un catalyseur métallique à base de platine par rapport à 100 parties en masse du constituant (A) ; et
(F) 0,01 à 10 parties en masse d'un agent piège à ions par rapport à 100 parties en masse du constituant (A), l'agent piège à ions étant de type échangeur de cations et/ou des deux types d'échange d'ions et comportant au moins un élément supporté sur celui dernier choisi parmi le Zr, le Bi, le Sb, le Mg et l'Al,
afin d'obtenir une composition présentant une conductivité thermique de 1,0 à 7,0 w/m.K, mesurée par une méthode du disque chaud conformément à la norme ISO 22007-2, et présentant une viscosité à 25 °C de 30 à 800 Pa.s, lorsqu'elle est mesurée avec un viscosimètre à spirale à une vitesse de rotation de 10 tr/min.

5. Procédé de production d'une composition de silicone thermoconductrice à durcissement par addition selon la revendication 4, dans lequel la quantité totale de groupe SiH dans le constituant (B) et le constituant (D) est dans une proportion de 0,11 à 5 par rapport à un groupe alcényle dans le constituant (A).

6. Procédé de production d'une composition de silicone thermoconductrice à durcissement par addition selon la revendication 4 ou 5, dans lequel (G) un agent de couplage silane et/ou (H) un organopolysiloxane représenté par la formule générale (4) suivante et présentant une viscosité à 25 °C de 0,01 à 30 Pa·s est en outre ajouté au mélange à traiter thermiquement à une température de 70 °C ou plus 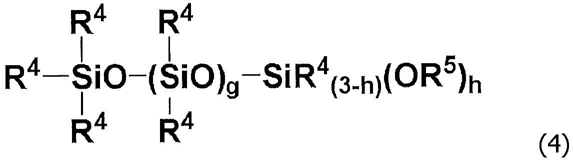 dans laquelle R⁴ représente indépendamment un groupe hydrocarboné monovalent non substitué ou substitué, R⁵ représente indépendamment un groupe alkyle, un groupe alcoxyalkyle, un groupe alcényle ou un groupe acyle, « g » représente un nombre entier de 5 à 100 et « h » représente un nombre entier de 1 à 3.
